# EUROPEAN PATENT APPLICATION

(11) **EP 4 484 144 A1**
(43) Date of publication of application: **01.01.2025**
(21) Application number: 23306071.4
(22) Date of filing: 29.06.2023
(51) Int. Cl.: B29D 11/00

(54) **METHOD FOR MANUFACTURING AN OPTICAL DEVICE, MANUFACTURING DEVICE FOR MANUFACTURING THE OPTICAL DEVICE, THE OPTICAL DEVICE AND EYEGLASSES**

(71) Applicant: Essilor International, 94220 Charenton-Le-Pont (FR)
(72) Inventor: MEYNEN, Mathieu, 94340 JOINVILLE-LE-PONT (FR); LE GUEN, Sophie, 91000 EVRY (FR)
(74) Representative: Korakis-Ménager, Sophie

(57) **Abstract**

Method for manufacturing an optical device, manufacturing device for manufacturing the optical device, the optical device and eyeglasses. The optical device comprises a first optical element and a second optical element. The method comprises a step of placing on a support a plurality of layers comprising successively the first optical element, a layer of a compression-activated glue, the second optical element. The layer of the compression-activated glue is between the first optical element and the second optical element. The support comprises spacers placed around the plurality of layers. The spacers have a height superior to a height of the plurality of the layers. The method also comprises a step of placing a layer of an elastic material covering the plurality of the layers and the spacers and a step of compressing the plurality of the layers to achieve a compression of the compression-activated glue above a predetermined compression level.

## Description

### Technical field

This disclosure relates to methods for manufacturing an optical device, manufacturing device for manufacturing the optical device, the optical device and eyeglasses comprising the optical device. The optical device is constituted of two optical elements glued together.

### Background information and prior art

According to some bounding methods of the state of the art, the optical elements may be glued together using compression-activated glue. The compression-activated glue may be located between the two optical elements. To activate the glue, one may apply a compression on one or two of the two optical elements.

Using these bounding methods of the state of the art, the compression may be inhomogeneous or too important.

This inhomogeneous compression may lead to imperfect activation of the glue. The imperfect activation of the glue may lead to inaccurate optical properties of the optical device. This too-important compression may lead to the deformation or breakage of one of the optical elements or two of the optical elements. The deformation may lead to inaccurate optical properties of the optical device.

A method, according to this disclosure, allows gluing together two optical elements to form an optical device by avoiding the drawbacks previously described.

### Summary

The following presents a simplified summary to provide a basic understanding of various aspects of this disclosure. This summary is not an extensive overview of all contemplated aspects and is intended to neither identify key or critical elements of all aspects nor delineate the scope of any or all aspects. The sole purpose is to present some concepts of one or more aspects in a simplified form as a prelude to the more detailed description that is presented later.

One aspect of this disclosure is a method for manufacturing an optical device. The optical device comprises a first optical element and a second optical element. The method comprises a step of placing on a support a plurality of layers comprising successively the first optical element, a layer of a compression-activated glue, the second optical element. The layer of the compression-activated glue is between the first optical element and the second optical element. The support comprises spacers placed around the plurality of layers. The spacers have a height superior to a height of the plurality of the layers. The method also comprises a step of placing a layer of an elastic material covering the plurality of the layers and the spacers and a step of compressing the plurality of the layers to achieve a compression of the compression-activated glue above a predetermined compression level.

The manufacturing method of this disclosure also has the advantage of overcoming a lack of planeness of the surface of the first optical element or the second optical element and obtaining a better bounding of the optical elements with a reduced risk of breakage of the first optical element and/or the second optical element.

Another aspect of this disclosure is a manufacturing device. The manufacturing device comprises a support comprising spacers, and compression means. The manufacturing device is configured for manufacturing an optical device. The optical device comprises a first optical element and a second optical element. The manufacturing device is configured for placing on a support a plurality of layers comprising successively the first optical element, a layer of a compression-activated glue and the second optical element. The layer of the compression-activated glue is between the first optical element and the second optical element. The spacers are placed around the plurality of the layers, the spacers having a height superior to a height of the plurality of the layers. The manufacturing device is also configured for placing a layer of an elastic material covering the plurality of the layers and the spacers and compressing, using the compression means, the plurality of the layers to achieve a compression of the compression-activated glue above a predetermined compression level.

Another aspect of this disclosure is an optical device. The optical device comprises a first optical element and a second optical element. The first optical element and the second optical element are glued together. The optical device being formed by placing on a support a plurality of layers comprising successively the first optical element, a layer of a compression-activated glue and the second optical element. The layer of the compression-activated glue is between the first optical element and the second optical element. The support comprises spacers placed around the plurality of the layers. The spacers have a height superior to a height of the plurality of the layers. The optical device is also formed by placing a layer of an elastic material covering the plurality of the layers and the spacers and compressing the plurality of the layers to achieve a compression of the compression-activated glue above a predetermined compression level.

Another aspect of this disclosure is eyeglasses. The eyeglasses comprise an optical device. The optical device comprises a first optical element and a second optical element. The first optical element and the second optical element are glued together. The optical device being formed by placing on a support a plurality of layers comprising successively the first optical element, a layer of a compression-activated glue and the second optical element. The layer of the compression-activated glue is between the first optical element and the second optical element. The support comprises spacers placed around the plurality of the layers. The spacers have a height superior to a height of the plurality of the layers. The optical device is also formed by placing a layer of an elastic material covering the plurality of the layers and the spacers and compressing the plurality of the layers to achieve a compression of the compression-activated glue above a predetermined compression level.

**A** computer may include a memory and a processor. Examples of processors include microprocessors, microcontrollers, graphics processing units (GPUs), central processing units (CPUs), application processors, digital signal processors (DSPs), reduced instruction set computing (RISC) processors, systems on a chip (SoC), field-programmable gate arrays (FPGAs), programmable logic devices (PLDs), state machines, gated logic, discrete hardware circuits, and other suitable hardware configured to perform the various functionality described throughout this disclosure. The memory may be a computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor of the computer.

Another aspect of this disclosure is a non-transitory program storage device, readable by a computer, tangibly embodying a program of instructions executable by the computer to perform a method for manufacturing the optical element.

All the embodiments described for the calculation module may be applied alone or in combination to the non-transitory program storage device.

### Description of the drawings

For a more complete understanding of the description provided herein and the advantages thereof, reference is now made to the brief descriptions below, taken in connection with the accompanying drawings and detailed description, wherein like reference numerals represent like parts.
Figure 1 represents a first element of a manufacturing device for manufacturing the optical device.
Figures 2-a and 2-b represent a second element of a manufacturing device for manufacturing the optical device.
Figure 3 represents the method, for manufacturing the optical device.
Figure 4 represents a compensation module.
The figure 5 represents an illustration of the plurality of layers and the spacers.
The figure 6 represents another illustration of the plurality of layers and the spacers.

### Detailed description of embodiments

The detailed description set forth below in connection with the appended drawings is intended as a description of various possible embodiments and is not intended to represent the only embodiments in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form to avoid obscuring such concepts.

### Description of the manufacturing device for manufacturing the optical device

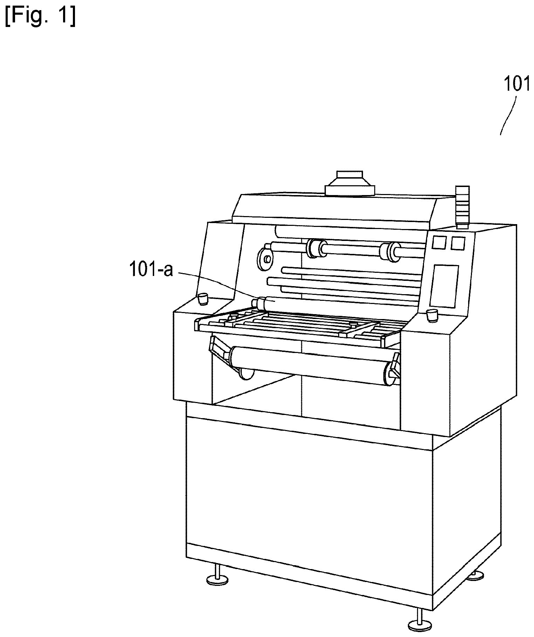

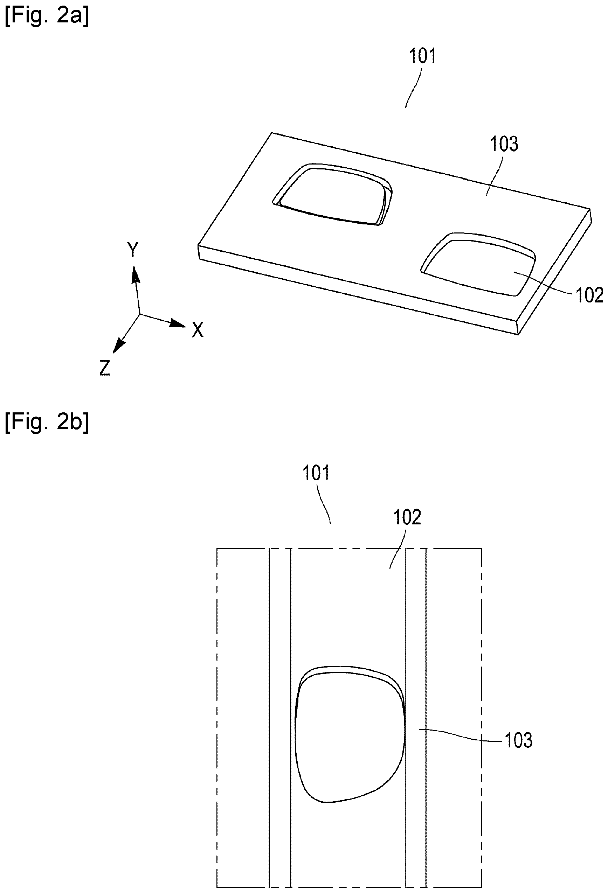

Figures 1, 2-a and 2-b represent different elements of a manufacturing device 101. This manufacturing device 101 may be configured for manufacturing an optical device.

The optical device may be intended to be integrated in an eyewear or eyeglasses. The eyewear or the eyeglasses may be intended to be worn by a wearer and the optical device may be adapted to the prescription of the wearer.

The optical device may comprise a first optical element and a second optical element.

The first optical element and the second optical element may be chosen among
- non-active optical elements and
- active optical elements.

In embodiments, one of the optical elements among the first optical element and the second optical element is an active optical element and the other is a non-active optical element. In other embodiments, the first optical element and the second optical element are active optical elements. In other embodiments, the first optical element and the second optical element are non-active optical elements.

By a non-active optical element, one means an optical element on which no value of a parameter of a functionality of the element may be modified.

The non-active optical elements may be optical lenses, or optical wafers. The optical wafers may have a thickness of around 0.5mm.

By an active optical element, one means an optical element in which a value of a parameter of a functionality of the element can be modified. The value of the parameter may be modified by applying a signal, for example an electrical signal to terminals of the active optical element. The functionality may be one of the following:
- a transmittance level of the active optical element,
- a tint of the active optical element,
- a reflectance level of the active optical element and
- a parameter of a polarization of the active optical element, for example a polarization angle of the active optical element,
- an optical power of the active optical element,
- elements displayed by the active optical element. The elements may be images, symbols, letters, or texts.

The active optical elements may be electrochromic lenses, photochromic lenses liquid crystal lenses, lenses with variable optical power or lenses configured to display elements. To display elements, the active optical element may comprise optical combiner such as for example a Light Optical Element (LOE). The active optical elements may also be optical wafers in which a value of a parameter of a functionality can be modified.

The non-active optical elements may be made of an organic material. The active optical elements may be made of a mineral material. The mineral material may be more rigid than the organic material and more prone to break than the organic material. The method of this disclosure has also the advantage of limiting the risk of breaking optical elements made of mineral material compared to methods of the state of the art.

The method of this disclosure may be useful when one of the two optical elements is an active optical element deprived of an optical power adapted to an optical prescription of the wearer. In this case, bounding at least one ophthalmic lens or at least on wafer, with an optical power adapted to the optical prescription of the wearer, to the active optical element allows obtaining an optical device with optical power adapted to the optical prescription of the wearer.

The manufacturing device 101 may comprise compression means 101-a that can be like in the figure 1 a roll-to-roll lamination module. In other embodiments the compression means 101-a may be a press for example a hydraulic press, or a stamp.

As presented in figure 2-a, the manufacturing device 101 may also comprise a support 102 and spacers 103. In the example of the figure 2-a, the support 102 and the spacers 103 are monobloc and are forming a jig. In other embodiments the support 102 and the spacers 103 may be independent elements. The figure 2-b represents another example of a monobloc support 102 and spacers 103.

The embodiment of the support 102 and the spacers 103 represented figure 2-a is only an example, and other shapes of the support 102 and the spacers 103 may be possible. Advantageously the shape of the spacers 103 may follow a general shape of the plurality of layers.

The support 102 may be made totally of polytetrafluoroethylene (PTFE) or may contain an external layer made of polytetrafluoroethylene (PTFE). The use of polytetrafluoroethylene (PTFE) allows the support 102 to be flat and to avoid the elements placed on the support to stick on this support.

When the support 102 and the spaces 103 are monobloc and form a jig, as it is represented figure 2-a and figure 2-b, this jig can be machined using a three-dimensional numerical controlled machine (also known as computer numerical control, and commonly called CNC).

The height of the spacers 103 or the height of the jig compared to the recess receiving the first optical element and the second element is selected according to a height of the combination of the first optical element and the second optical element.

The manufacturing device 101 may also comprise positioning means that are configured to position the first optical element and the second optical element on the support.

The positioning means may be an industrial robot comprising for example a robotic arm. The robotic arm may comprise at one of its extremities at least two fingers that may grip, move and release the different elements to be placed on the support.

In other embodiments the robotic arm may comprise at one of its extremities a suction cup that may grip, move and release the different elements to be placed on the support.

In embodiments the manufacturing device 101 may also comprise a conveyor for example a belt conveyor to move the support 102, the optical elements and the spacer 103 toward a position adapted for the compression by the compression means 101-a.

The manufacturing device 101 may also comprise a control module. The control module may be configured to control the compression means and possibly the positioning means and the conveyor.

The control module may comprise a memory and a processor.

Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field-programmable gate arrays (FPGAs), programmable logic devices (PLDs), state machines, gated logic, discrete hardware circuits, and other suitable hardware configured to perform the various functionality described throughout this disclosure.

The memory may be a computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor of the calculation module.

The control module may be included in independent module, for example, a smartphone or a computer, a system on chip (SoC) or a graphics processing unit (GPU). The calculation module may also be a virtual machine located on a cloud network or a server not co-located with the manufacturing device 101.

Using the control module may have the advantage of allowing a partially or fully automatic manufacturing of the optical device and to obtain a more precise optical device (by precise one means that the optical device more precisely respects the expected specification).

### Description of the method for manufacturing the optical device

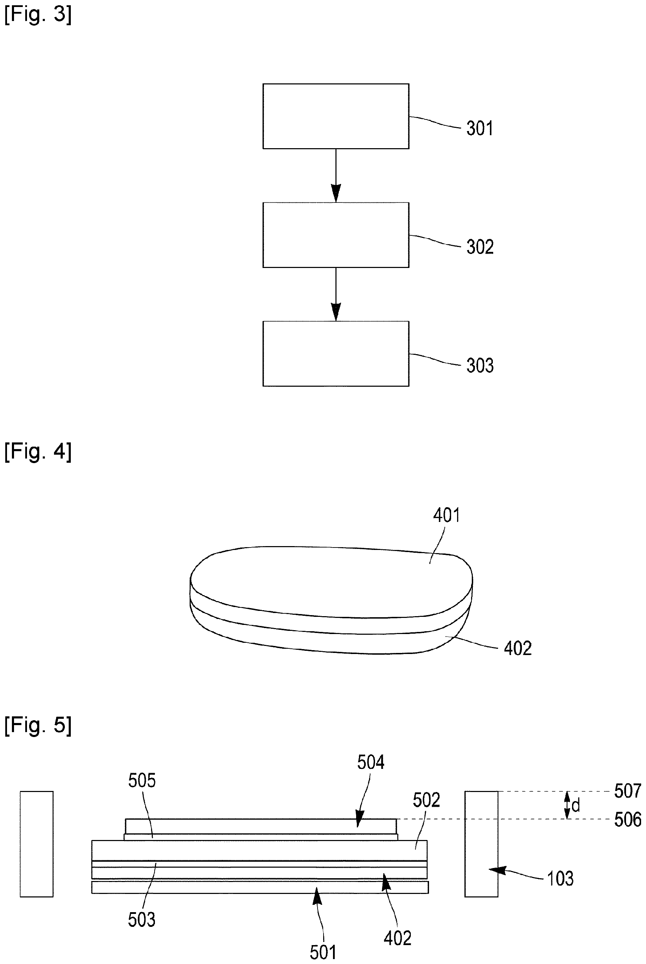

The method for manufacturing the optical device is represented schematically in the figure 3. The figures 4, 5 and 6, that are described later one, present the different elements used to manufacture the optical device. The method for manufacturing the optical device comprises:
- a step 301 of placing on the support 102 a plurality of layers comprising successively:
   ∘ a first layer 501 formed of a first elastic material
   ∘ the first optical element 402
   ∘ a layer of a compression-activated glue 503
   ∘ the second optical element 502
the layer of the compression-activated glue 503 is between the first optical element 402 and the second optical element 502,
▪ a step 302 of placing a second layer 601 formed of a second elastic material covering the plurality of layers and the spacers 103 and
▪ a step 303 of compressing using the compression means 101-a of the manufacturing device 101 the plurality of layers to achieve a compression of the compression-activated glue 503 above a predetermined compression level.

As previously described, the support 102 comprises spacers 103 placed around the plurality of layers. The spacers 103 have a height superior to a height of the plurality of the layers. The height of the plurality of the layers is calculated when the layers are stacked on each other. The spacers 103 may have been previously selected so that a height of the spacers 103 is superior to a height of the plurality of layers. When the support 102 and the spacers 103 are monobloc and form a jig, one can select an adapted jig among a plurality of jigs each having a different height of the recess destinated to receive the plurality of layers.

Using this method an optical device comprising the first optical element 402 and the second optical element 502 glued together can be realized.

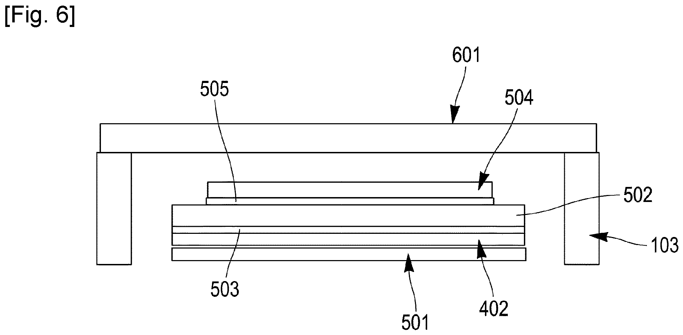

In other embodiments, more than two optical elements may be glued together, for example, 3, 4, 5, 6 or even more optical elements. For example, figures 5 and 6, detailed later in this disclosure, describe an embodiment in which three optical elements are glued together. When more than two optical elements are glued together, the method of figure 3 is identical with the difference that the plurality of the layers comprises N optical elements and N-1 layers of compression-activated glue. A layer of compression-activated glue may be placed between each couple of optical elements.

In embodiments one can select the height of the spacers 103 according to a thickness of the second layer 601 and according to a type of the second elastic material.

In embodiments the second elastic material may be silicon.

In embodiments the first elastic material is selected to avoid the rolling of the optical elements and to avoid the breakage of the optical elements during the compression. The first elastic material may be Polymethyl methacrylate PMMA that the inventors found surprisingly good at avoiding the previously described rolling and breakage. Using Polymethyl methacrylate also allows an evaluation of the cosmetic control of the gluing that is easier to realise.

In embodiments one can select the height of the spacers 103 so that a difference between the height of the spacers 103 and the height of the plurality of the layers allows a correct compression of the compression-activated glue without damaging the first optical element or the second optical element.

In embodiments a difference between the height of the spacers 103 and the height of the plurality of the layers may be between 50µm and 400µm more precisely between 80µm and 400µm.

Using the second layer 601 allows an increase of the range of differences allowing a gluing of the optical elements together without the breakage of one of them. When the second layer 601 is not placed the range of differences allowing gluing without breakage is limited to 50µm to 80µm.

In embodiments the spacers 103 may be parallel to a longitudinal axis of the first optical element 402 or a longitudinal axis of the second optical element 502.

In embodiments the compression may be realized by the roll-to-roll lamination module of the manufacturing device.

In embodiments the compressing may be realized by the press of the manufacturing device. This press may be a hydraulic press.

In embodiments the compressing may be realized by the stamp of the manufacturing device.

In embodiments and when a face of the first optical element 402 facing the first layer 501 is not planar or a face of the second optical element 502 facing the second layer 601 is not planar, the method may comprise a step of adding a compensation module 401 between the first layer 501 and the first optical element 402 or between the second optical element 502 and the second layer 601.

The compensation module 401 may be a substantially flat element, a first face of the compensation module 401 may be planar, a second face may have a shape interlocking with a shape of the non-planar face of the first optical element 402 or of the non-planar face of the second optical element 502.

The figure 4 represents such compensation module 401 when it is placed against the first optical element 402. As described previously in embodiments not represented in the figure 4 the compression module 401 may be placed against the second optical element 502 of the plurality of layer. In embodiments and when both the first optical element 402 and the second optical element 502 comprises a non-planar face, two compensation modules may be used. One of the two compensation modules may face the non-planar face of the first optical element 402 and another of the two compensation modules may face the non-planar face of the second optical element 502.

In embodiments the method may be realized by one or more operators.

In embodiments the method may be realized partially or fully automatically, in this case the control module of the manufacturing device 101 may be configured to control the positioning means and the compression means 101-a to manufacture the optical device.

In other words, and when the method of the figure 3 is realized by an operator, the operator may realize the following steps:
- A step of cleaning the first optical element 402 and the second optical element 502, more precisely the face of the first optical element 402 and the face of the second optical element 502 facing each other.
- A step of deposition of the layer 503 of the compression-activated glue on the first optical element 402 or the second optical element 502. If only one of the optical elements is made of a mineral material, the layer of the compression-activated glue may be advantageously deposit on this optical element. In embodiments one of the optical elements may be previously recover by the layer of the compression-activated glue. If necessary, the excess of glue may be removed.
- A step of placing one of the optical elements on the support, advantageously the optical element made of mineral material is placed on the support.
- A step of placing the other optical element on the optical element already placed on the support.
- A step of adding the layer of the elastic material on top of the two optical elements.
- A step of compressing the two optical elements and the layer of the elastic material.

The step of compressing may be realized using the compression means 101-a.
- An optional step of controlling the quality of the optical device by realizing an optical control and a cosmetic control. During the cosmetic control one can control that the centre zone of the optical device is spotless. The edge of the optical device may comprise vibes that could be remove during a later cutting step. One can perform optical control (for example using a focimeter) and cosmetic control with an arc lamp.
- An optional step of removing bubbles between the first optical element and the second optical element. This step may be realized by placing the optical device inside an autoclave during 20 minutes at 50°C. It also improves the quality of the gluing.

The figure 5 represents an illustration of the plurality of layers and the spacers 103. The first layer 501 formed of the first elastic material may be placed on the support 102. The first optical element 402 may be placed on the first layer 501. The second optical element 502 may be placed on the first optical element 501. In between the first optical element 402 and the second optical element 502 is located the layer 503 of the compression-activated glue. In figure 5 a third optical element 504 is glued to the second optical element 502. To achieve this one may add a further layer 505 of the compression-activated glue. The further layer 505 of the compression-activated glue is located between the second optical element 502 and the third optical element 504.

Advantageously and, as it is represented in figure 5, the difference between the height 506 of the plurality of layer and the height 507 of the spacers 103 is noted d.

The figure 6 represents the location of the second layer 601 formed of the second elastic material. During the compression step 303 the compression means 101-a may take support on the second layer 601 to realize the compression of the first optical element 402 and the second optical element 502. In figure 6 the third optical element 504 and the further layer 505 of the compression-activated glue are represented. However, these two elements are optional and in other embodiments these elements are not included.

In embodiments the layer 501 and/or the layer 601 may be constituted of a plurality of layers agglomerated together.

## Claims

1. Method for manufacturing an optical device, the optical device comprising a first optical element (402) and a second optical element (502), the method comprising:
• placing (301) on a support (102) a plurality of layers comprising successively:
∘ the first optical element (402),
∘ a layer (503) of a compression-activated glue and
∘ the second optical element (502)
the layer (503) of the compression-activated glue being between the first optical element (402) and the second optical element (502),
the support (102) comprising spacers (103) placed around the plurality of the layers, the spacers (103) having a height superior to a height of the plurality of the layers,
the method also comprising:
▪ placing (302) a layer (601) of an elastic material covering the plurality of the layers and the spacers (103) and
▪ compressing (303) the plurality of the layers to achieve a compression of the compression-activated glue above a predetermined compression level.

2. The method according to the claim 1, the method also comprising,
selecting the height of the spacers (103) according to a thickness of the layer (601) of the elastic material and/or according to a type of the elastic material.

3. The method according to the claim 1 or 2,
the spacers (103) being parallel to a longitudinal axis of the first optical element (402) or a longitudinal axis of the second optical element (502).

4. The method according to any one of the claims 1 to 3
the spacers (103) and the support (102) being monobloc.

5. The method according to the claim 4
the spacers (103) and the support (102) forming together a jig.

6. The method according to any one of the claims 1 to 5,
the compression (303) being realized by a roll-to-roll lamination machine.

7. The method according to any one of the claims 1 to 5,
the compression (303) being realized by a press for example a hydraulic press.

8. The method according to any one of the claims 1 to 5,
the compression (303) being realized by a stamp.

9. The method according to any one of the claims 1 to 8
the first optical element (402) and the second optical element (502) being chosen among:
• non-active optical elements, and
• active optical elements.

10. The method according to any one of the claims 1 to 9,
the method also comprising, when a face of the first optical element (402) facing the support (102) is not planar or a face of the second optical element (502) facing the layer (601) of the elastic material is not planar, adding a compensation module (403) between the support (102) and the first optical element (402) or between the second optical element (502) and the layer (601) of the elastic material,
the compensation module (403) being a substantially flat element,
a first face of the compensation module (403) being planar,
a second face of the compensation module (403) having a shape interlocking with a shape of the non-planar face of the first optical element (502) or of the non-planar face of the second optical element (602).

11. The method according to any one of the claims 1 to 10,
the height of the spacers (103) being chosen so that a difference between the height of the spacers (103) and the height of the plurality of the layers allows a correct compression of the compression-activated glue without damaging the first optical element (402) or the second optical element (502).

12. The method according to any one of the claims 1 to 10,
a difference between the height of the spacers (103) and the height of the plurality of the layers being between 50µm and 400µm.

13. Manufacturing device (101) comprising:
a support (102) comprising spacers (103),
compression means (101-a),
the manufacturing device (101) being configured for manufacturing an optical device, the optical device comprising a first optical element (402) and a second optical element (502), the manufacturing device (101) being configured for:
• placing on a support (102) a plurality of layers comprising successively:
∘ the first optical element (402),
∘ a layer (503) of a compression-activated glue and
∘ the second optical element (502)
the layer (503) of the compression-activated glue being between the first optical element (402) and the second optical element (502),
the spacers (103) being placed around the plurality of the layers, the spacers (103) having a height superior to a height of the plurality of the layers,
the manufacturing device (101) being also configured for:
▪ placing a layer (601) of an elastic material covering the plurality of the layers and the spacers (103) and
▪ compressing, using the compression means (101-a), the plurality of the layers to achieve a compression of the compression-activated glue above a predetermined compression level.

14. Optical device comprising a first optical element (402) and a second optical element (502), the first optical element (402) and the second optical element (502) being glued together,
the optical device being formed by:
• placing on a support (102) a plurality of layers comprising successively:
∘ the first optical element (402),
∘ a layer (503) of a compression-activated glue and
∘ the second optical element (502)
the layer (503) of the compression-activated glue being between the first optical element (402) and the second optical element (502),
the support (102) comprising spacers (103) placed around the plurality of the layers, the spacers (103) having a height superior to a height of the plurality of the layers,
the optical device being also formed by:
▪ placing a layer (601) of an elastic material covering the plurality of the layers and the spacers (103) and
▪ compressing the plurality of the layers to achieve a compression of the compression-activated glue above a predetermined compression level.

15. Eyeglasses comprising an optical device, the optical device
comprising a first optical element (402) and a second optical element (502), the first optical element (402) and the second optical element (502) being glued together,
the optical device being formed by:
• placing on a support (102) a plurality of layers comprising successively:
∘ the first optical element (402),
∘ a layer (503) of a compression-activated glue and
∘ the second optical element (502)
the layer (503) of the compression-activated glue being between the first optical element (402) and the second optical element (502),
the support (102) comprising spacers (103) placed around the plurality of the layers, the spacers (103) having a height superior to a height of the plurality of the layers,
the optical device being also formed by:
▪ placing a layer (601) of an elastic material covering the plurality of the layers and the spacers (103) and
compressing the plurality of the layers to achieve a compression of the compression-activated glue above a predetermined compression level.
